(19) Europäisches Patentamt
European Patent Office
Office européen des brevets

(11) **EP 3 879 600 A1**

(12) **EUROPEAN PATENT APPLICATION**
published in accordance with Art. 153(4) EPC

(43) Date of publication:
**15.09.2021 Bulletin 2021/37**

(51) Int Cl.:
**H01M 4/131** (2010.01)

(21) Application number: **20864337.9**

(22) Date of filing: **21.01.2020**

(86) International application number:
**PCT/CN2020/073589**

(87) International publication number:
**WO 2021/146943 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **NingDe Amperex Technology Limited**
  **Ningde City, Fujian 352100 (CN)**
• **Dongguan Amperex Technology Limited**
  **Dongguan, Guangdong 523000 (CN)**

(72) Inventors:
• **LIU, Wenyuan**
  **Ningde City, Fujian 352100 (CN)**
• **LANG, Ye**
  **Ningde City, Fujian 352100 (CN)**
• **PENG, Gang**
  **Ningde City, Fujian 352100 (CN)**
• **ZHANG, Yangyang**
  **Ningde City, Fujian 352100 (CN)**

(74) Representative: **Icosa**
  **83 avenue Denfert-Rochereau**
  **75014 Paris (FR)**

(54) **POSITIVE ELECTRODE MATERIAL, ELECTROCHEMICAL DEVICE COMPRISING SAME, AND ELECTRONIC DEVICE**

(57)    The present application relates to a cathode material, and an electrochemical device and an electronic device including the cathode material. The cathode material includes secondary particles formed by primary particles, and the secondary particles include: a first group of secondary particles, a second group of secondary particles and a third group of secondary particles. The particle size of the first group of secondary particles is greater than 1.25 times of the average particle size of the secondary particles, the particle size of the second group of secondary particles is less than 0.75 time of the average particle size of the secondary particles, and the particle size of the third group of secondary particles is 0.75 time to 1.25 times of the average particle size of the secondary particles. By using the cathode material meeting the above particle size conditions, the electrochemical device of the present application has excellent cycle performance and storage performance.

FIG. 3

**Description**

**BACKGROUND**

**1. Technical Field**

The present application relates to the technical field of energy storage, in particular to a cathode material, and an electrochemical device and an electronic device including the same.

**2. Description of the Prior Art**

With the rapid development of mobile electronic technology, the frequency and experience requirements of people for using mobile electronic devices such as mobile phones, tablets, notebook computers, drones, and the like are increasing. Therefore, electrochemical devices (for example, lithium-ion batteries) that provide energies for electronic devices need to exhibit higher energy density, greater rate, higher safety and less capacity attenuation after repeated charge and discharge processes.
The energy density and cycle performance of electrochemical devices are closely related to their cathode materials. In view of this, people continue to do further research and improvement on cathode materials. In addition to seeking novel cathode materials, improvement and optimization of the material composition of cathode materials is also one of the important solutions.

**SUMMARY**

The present application provides a cathode material, and an electrochemical device and an electronic device including the cathode material in an attempt to solve at least one of the problems in the related field at least to some extent.
According to one aspect of the present application, the present application provides a cathode material, including secondary particles formed by primary particles. The secondary particles include: a first group of secondary particles, a second group of secondary particles and a third group of secondary particles. The particle size of the first group of secondary particles is greater than 1.25 times of the average particle size of the secondary particles, the particle size of the second group of secondary particles is less than 0.75 time of the average particle size of the secondary particles, and the particle size of the third group of secondary particles is 0.75 time to 1.25 times of the average particle size of the secondary particles.
According to another aspect of the present application, the present application provides an electrochemical device, including: an anode, a separator and a cathode, wherein the cathode includes the above cathode material.
According to another aspect of the present application, the present application provides an electronic device, including the above electrochemical device.
According to the electrochemical device of the present application, by using the cathode material meeting the above particle size conditions as the cathode, the distribution of the cathode material during cathode preparation is improved, so that the electrochemical device of the present application has excellent cycle performance and storage performance.
Additional aspects and advantages of the embodiments of the present application will be described or shown in the following description or interpreted by implementing the embodiments of the present application.

**BRIEF DESCRIPTION OF THE DRAWINGS**

Drawings necessary to describe the embodiments of the present application or the prior art will be briefly illustrated so as to facilitate the description of the embodiments of the present application. Obviously, the accompanying drawings described below only show some embodiments of the present application. For those skilled in the art, the drawings of other embodiments can still be obtained according to the structures illustrated in the drawings without any creative effort.

FIG. 1 is a scanning electron microscope (SEM) 500-times image of a cathode material according to the prior art.
FIG. 2 is a scanning electron microscope (SEM) 500-times image of a cathode material according to embodiments of the present application.
FIG. 3 is a schematic diagram of a long axis and a short axis of the secondary particles.

**DETAILED DESCRIPTION**

The embodiments of the present application will be described in detail below. Throughout the specification, the same or similar components and components having the same or similar functions are denoted by similar reference numerals. The embodiments described herein with respect to the drawings are illustrative and graphical, and are used for providing a basic understanding of the present application. The embodiments of the present application should not be interpreted as limitations to the present application.

As used in the present application, terms "approximately", "substantially", "essentially", and "about" are used for describing and explaining a small variation. When being used in combination with an event or circumstance, the term may refer to an example in which the event or circumstance occurs precisely, and an example in which the event or circumstance occurs approximately. For example, when being used in combination with a value, the term may refer to a variation range of less than or equal to $\pm 10\%$ of the value, for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$. For example, if the difference between two numerical values is less than or equal to $\pm 10\%$ of the average of the values (e.g., less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$), the two values may be considered "about" the same.

In addition, sometimes, a quantity, a ratio, and another value are presented in a range format in the present application. It should be appreciated that such range formats are for convenience and conciseness, and should be flexibly understood as including not only values explicitly specified to range constraints, but also all individual values or sub-ranges within the ranges, like explicitly specifying each value and each sub-range.

In the detailed description and the claims, a list of items connected by the term "at least one of" or similar terms may mean any combination of the listed items. For example, if items A and B are listed, then the phrase "at least one of A and B" means only A; only B; or A and B. In another example, if items A, B and C are listed, then the phrase "at least one of A, B and C" means only A; or only B; only C; A and B (excluding C); A and C (excluding B); B and C (excluding A); or all of A, B and C. The item A may include a single component or multiple components. The item B may include a single component or multiple components. The item C may include a single component or multiple components.

In the detailed description and claims, the terms "long axis" and "short axis" are methods of simplified description of the meaning of sieving particle size. The "long axis" is the maximum length of particles in the image obtained by scanning electron microscope (SEM) testing, and the "short axis" is the maximum length of the particles perpendicular to the "long axis" in the image. In addition, the term "average particle size" is the average value of the long axis of the particles in the image obtained by the scanning electron microscope testing. It should be understood that the particles defined by "long axis", "short axis" or "average particle size" include either primary particles or secondary particles.

The present application limits the particle size distribution of the secondary particles of the cathode material to a smaller range by adjusting a cathode material preparation process, thereby enhancing the processability of the cathode material in electrochemical device preparation (for example, high-speed coating), and further effectively enhancing the cycle performance of the electrochemical device. At present, the cathode material of electrochemical devices (for example, lithium-ion batteries) mostly uses lithium cobalt oxide, but cobalt is a high-environmental-pollution and high-cost element, so high-nickel materials (the nickel content accounting for fifty percent or above of all transition metal elements) have received extensive attention due to their lower cobalt content and higher actual capacity per gram than lithium cobalt oxide. However, the high-nickel materials has poor processability, and particles and bubbles are easily generated when the cathode is coated, which further leads to uneven weight distribution of the cathode, thereby affecting the cycle performance and rate performance of the electrochemical device.

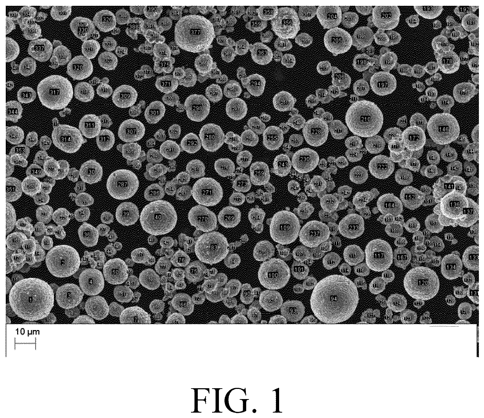

FIG. 1 is a 500-times scanning electron microscope (SEM) image of a cathode material (high-nickel material) having wide particle size distribution according to the prior art.

According to one aspect of the present application, embodiments of the present application provide a cathode material, including secondary particles formed by primary particles. The secondary particles include: a first group of secondary particles, a second group of secondary particles and a third group of secondary particles. The particle size of the first group of secondary particles is greater than about 1.25 times of the average particle size of the secondary particles; the particle size of the second group of secondary particles is less than about 0.75 time of the average particle size of the secondary particles; and the particle size of the third group of secondary particles is about 0.75 time to about 1.25 times of the average particle size of the secondary particles.

In some embodiments, based on the total number of the secondary particles, the total number of the third group of secondary particles accounts for greater than or equal to about 60%, and based on the total volume of the secondary particles, the total volume of the third group of secondary particles accounts for greater than or equal to about 50%.

In some embodiments, based on the total number of the secondary particles, the total number of the third group of secondary particles accounts for about 80% to about 93%, and the total number of the first group of secondary particles accounts for about 1% to about 10%.

In some embodiments, based on the total volume of the secondary particles, the total volume of the third group of secondary particles accounts for about 80% to about 95%, and the total volume of the first group of secondary particles accounts for about 1% to about 10%.

In some embodiments, the ratio of the total number of the first group of secondary particles to the total number of the second group of secondary particles is about 0.1 to about 10, and the ratio of the total volume of the first group of secondary particles to the total volume of the second group of secondary particles is about 0.1 to about 10.

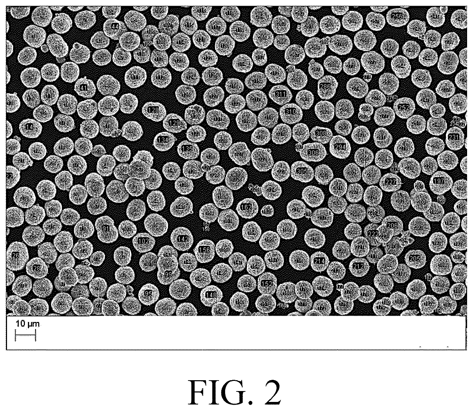

FIG. 2 is a 500-times scanning electron microscope (SEM) image of a cathode material according to particle size distribution of embodiments of the present application. As shown in FIG. 2, by adjusting a preparation method of the cathode material, the particle size distribution of the secondary particles of the cathode material in the present application is more concentrated. Here, scanning electron microscopy (SEM) will be used to determine the number, average particle size and shape (long axis and short axis) of particles.

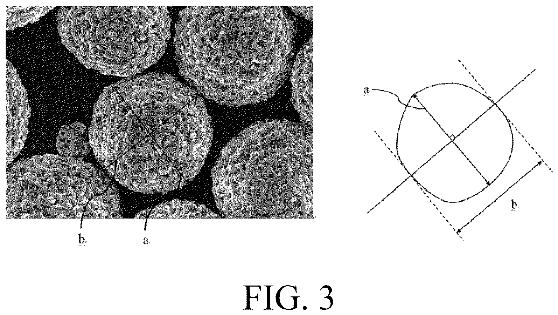

FIG. 3 is a schematic diagram of the long axis and the short axis of the secondary particles. As shown in FIG. 3, the average particle size of the secondary particles of the cathode material is the average value of the long axis a of the particles measured in the microscope image as the particle size while the short axis b perpendicular to the long axis a of the particles in the microscope image is recorded.

In some embodiments, based on the total number of the secondary particles of the cathode particles, the length ratio of the long axis a to the short axis b of 80% or above of the secondary particles is about 1 to about 2. In other embodiments, the length ratio of the long axis a to the short axis b of 80% or above of the secondary particles based on the total number is approximately, for example, about 1.0, about 1.2, about 1.4, about 1.5, about 1.6, about 1.8, about 2.0, or in a range formed by any two of these values. The range of the ratio of the long axis a to the short axis b of the secondary particles of the cathode material of the embodiments of the present application has a better particle shape, can improve the slurry fluidity when the cathode material is coated and reduce the friction force among the secondary particles during cold pressing, and thereby enhancing the processability of the cathode material.

In some embodiments, the ratio of DvlO to Dn10 of the secondary particles is about 1 to about 3. The closer the ratio of DvlO to Dn10 of the secondary particles is to 1, the more concentrated the distribution of the particles. In other embodiments, the ratio of DvlO to Dn10 of the secondary particles is approximately, for example, about 1.0, about 1.2, about 1.4, about 1.5, about 2.0, about 2.5, about 3.0, or in a range formed by any two of these values.

By using the cathode material that meets the particle size distribution of the secondary particles of the embodiments of the present application, the probability of generating particle scratches and bubbles can be reduced at the time of high-speed coating during cathode preparation of the present application. In addition, the preparation method of the cathode material of the present application can effectively limit micro-powder generated by sintering, and can reduce the uneven distribution of the lithium content and the nickel content due to great difference in particle sizes. The cathode material and the electrochemical device thereof of the present application have excellent cycle stability.

In some embodiments, the average particle size of the secondary particles of the cathode material is about 1 $\mu$m to about 30 $\mu$m. In other embodiments, the average particle size of the secondary particles is approximately, for example, about 1 $\mu$m, about 5 $\mu$m, about 10 $\mu$m, about 15 $\mu$m, about 20 $\mu$m, about 25 $\mu$m, about 30 $\mu$m or in a range formed by any two of these values. The average particle size range of the cathode material of the embodiments of the present application can improve the dynamic performance of the cathode material, and can reduce the risk of negative reaction with an electrolyte.

In some embodiments, the length of the long axis of the primary particles forming the secondary particles is about 100 nm to about 5 $\mu$m, and the length of the short axis of the primary particles is about 10 nm to about 1 $\mu$m. In other embodiments, the length of the long axis of the primary particles is, for example, about 100 nm, about 200 nm, about 500 nm, about 1 $\mu$m, about 3 $\mu$m, about 5 $\mu$m, or in a range formed by any two of these values. In other embodiments, the length of the short axis of the primary particles is approximately, for example, about 10 nm, about 50 nm, about 100 nm, about 200 nm, about 500 nm, about 800 nm, about 1 $\mu$m, or in a range formed by any two of these values. The length ranges of the long axis and the short axis of the primary particles of the embodiments of the present application can improve the dynamic performance of the cathode material, and can improve the high-temperature storage performance and cycle performance of the electrochemical device.

In some embodiments, the shape of the primary particles includes, but is not limited to, one or more of a plate shape, a needle shape, a rod shape, a spherical shape, an ellipsoid shape and the like. In some embodiments, the crystal structure of the primary particles includes one or more of a hexagonal lamellar structure, a spinel structure and a rock salt structure, and the crystal structure belongs to an R-$\overline{3}$m space group.

According to some embodiments of the present application, the cathode material includes a lithium-containing metal oxide represented by a general formula $Li_xM1_yM2_zO2$, wherein $0.95 \leq x \leq 1.05$, $0 < y \leq 1$, $0 \leq z \leq 0.1$, $y+z=1$, M1 is selected from the group consisting of Ni, Co, Mn, Al and combinations thereof, and M2 is selected from the group consisting of Mg, Ti, Zr, Sc, V, Cr, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu and combinations thereof.

The lithium-containing metal oxide (for example, high-nickel material) has concentrated particle size distribution and larger granularity, thereby further ensuring the cycle stability of the material while ensuring high battery capacity. It should be understood that, without departing from the inventive spirit of the present application, those skilled in the art can select any conventional cathode active material in the art according to specific demands without being limited thereto.

In some embodiments, the secondary particles of the cathode material further include a surface layer, and the surface layer includes at least one element of B, Al, Zr, C and S.

In some embodiments, a specific surface area of the cathode material is about 0.300 $m^2/g$ to about 1.000 $m^2/g$.

In some embodiments, the preparation method of the cathode material of the present application includes the following steps:

1. Preparation of precursor:

The precursor is prepared by a batch method: a certain amount of transition metal salt solution is taken and mixed with an alkaline solution and ammonia water according to a stoichiometric ratio of a matrix, the mixture is injected into a reactor filled with nitrogen, and the pH of the solution in the reactor is kept within a certain range by adjusting the content of the ammonia water. Subsequently, the reaction solution in the reactor is rapidly stirred at a stirring rate of about 600 rpm to about 1000 rpm, and the rapid stirring time is about 6 hours to about 15 hours. After the rapid stirring, the reaction solution is slowly stirred at a stirring rate of about 600 rpm to about 1000 rpm, and the slow stirring time is about 12 hours to about 30 hours, so that the reaction solution is aged to produce secondary particles. The obtained solid-liquid mixture was filtered, washed with water and dried to obtain the precursor.

2. Preparation of cathode material

A certain proportion of the precursor is prepared and mixed with a lithium salt and a doping raw material according to the stoichiometric ratio of the matrix, and primary sintering is performed, wherein the sintering temperature is about 750°C to about 830°C, and the heat treatment period is about 8 hours to about 20 hours. After the primary sintering, the primary sintered product is washed with water and dried, mixed with raw materials of the surface layer, and then subjected to secondary sintering, wherein the sintering temperature is about 350°C to about 450°C, and the heat treatment period is about 2 hours to about 10 hours. Subsequently, cooling, drying, crushing and classification treatment are performed to obtain the cathode material.

In the present application, the stirring speed and time are controlled by using a two-stage manner of rapid stirring and slow stirring in the preparation of the precursor, and thereby achieving the effect of controlling the particle size distribution and shape of the secondary particles of the cathode material. The distribution width is affected by both the speed of the rapid stirring and the time of the slow stirring, and the sphericity is mainly affected by the speed of the rapid stirring. Both the stirring time and the stirring speed need to be controlled within a reasonable range. If the stirring time is too short, small particles cannot be fully grown, and the effect of concentrated particle size distribution cannot be achieved. If the stirring time is too long, the overall particle size of the primary particles is too large, which is not conducive to the rate performance and is a waste of resources. If the stirring speed is too small, the reaction is insufficient, which is not conducive to the formation of the secondary particles having concentrated particle size distribution and having a spherical shape. If the stirring intensity is too large, the grown primary particles are likely to break up and produce fine powder, which is also not conducive to the formation of the secondary particles having concentrated particle size distribution.

It should be understood that without departing from the spirit of the present application, steps in the preparation method of the cathode material in the embodiments of the present application may select or be replaced with other conventional treatment methods in the art according to specific needs without being limited thereto.

According to another aspect of the present application, some embodiments of the present application also provide an electrochemical device including the cathode material of the present application. In some embodiments, the electrochemical device is a lithium-ion battery. The lithium-ion battery includes: an anode, a separator and a cathode. The separator is disposed between the cathode and the anode, wherein the cathode includes the cathode material in the above embodiments.

In some embodiments, the cathode further includes a cathode current collector and the anode further includes an anode current collector, wherein the cathode current collector may be aluminum foil or nickel foil, and the anode current collector may be copper foil or nickel foil. However, other cathode current collectors and anode current collectors commonly used in the art may be used without being limited thereto.

In some embodiments, the anode includes an anode material capable of absorbing and releasing lithium (Li) (hereinafter, sometimes referred to as "an anode material capable of absorbing/releasing lithium Li"). Examples of the anode material capable of absorbing/releasing lithium (Li) may include carbon materials, metal compounds, oxides, sulfides, nitrides of lithium such as LiN3, lithium metal, metals forming alloys together with lithium, and polymer materials.

In some embodiments, the cathode and the anode may each independently further include at least one of a binder and a conductive agent.

In some embodiments, the binder includes at least one of polyvinylidene fluoride, a vinylidene fluoride-hexafluoropropylene copolymer, polyamide, polyacrylonitrile, polyacrylic ester, polyacrylic acid, polyacrylate salt, carboxymethylcellulose sodium, polyvinylpyrrolidone, polyvinyl ether, polymethyl methacrylate, polytetrafluoroethylene, polyhexafluoropropylene and styrene-butadiene rubber. In some embodiments, the conductive agent includes at least one of carbon nanotubes, carbon fibers, conductive carbon black, acetylene black, graphene and Ketjen black. It should be understood that those skilled in the art may select the conventional binder and conductive agent in the art according to actual needs without being limited thereto.

In some embodiments, the separator includes, but is not limited to, at least one selected from polyethylene, polypropylene, polyethylene terephthalate, polyimide and aramid. For example, the polyethylene includes at least one component selected from high-density polyethylene, low-density polyethylene and ultra-high molecular weight polyethylene. In particular, the polyethylene and the polypropylene have a good function on preventing short circuits, and can improve the stability of the battery by a turn-off effect.

The lithium-ion battery of the present application further includes an electrolyte, the electrolyte may be one or more of a gel electrolyte, a solid electrolyte and an electrolyte solution, and the electrolyte solution includes a lithium salt and a non-aqueous solvent.

In some embodiments, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB and lithium difluoroborate. For example, the lithium salt is LiPF6 because it can give a high ionic conductivity and improve the cycle performance.

The non-aqueous solvent may be a carbonate compound, a carboxylate compound, an ether compound, other organic solvents or a combination thereof.

The carbonate compound may be a chain carbonate compound, a cyclic carbonate compound, a fluorocarbonate compound or a combination thereof.

Examples of other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate and combinations thereof.

In some embodiments, the non-aqueous solvent is selected from the group consisting of ethylene carbonate, propylene carbonate, diethyl carbonate, dimethyl carbonate, ethyl methyl carbonate, propylene carbonate, methyl acetate, ethyl propionate and combinations thereof.

It should be understood that without departing from the spirit of the present application, the preparation methods of the cathode, the anode, the separator and the lithium-ion battery in the embodiments of the present application may select any suitable conventional method in the art according to specific needs without being limited thereto. In an implementation of a method for manufacturing an electrochemical device, the preparation method of the lithium-ion battery includes: the cathode, the separator and the anode in the above embodiments are sequentially wound, folded or stacked into an electrode assembly, the electrode assembly is placed into, for example, an aluminum-plastic film, an electrolyte is injected, and subsequently, vacuum packaging, standing, formation, shaping and other procedures are performed to obtain the lithium-ion battery.

Although the illustration has been made above by taking the lithium-ion battery as an example, after reading the present application, those skilled in the art can conceive that the cathode material of the present application can be used in other suitable electrochemical devices. Such electrochemical devices include any device for electrochemical reaction, and specific examples thereof include all kinds of primary batteries, secondary batteries, fuel cells, solar cells or capacitors. In particular, the electrochemical device is a lithium secondary battery, including a lithium metal secondary battery, a lithium-ion secondary battery, a lithium polymer secondary battery or a lithium ion polymer secondary battery.

Some embodiments of the present application further provide an electronic device, and the electronic device includes the electrochemical device in the embodiments of the present application.

The electronic device of the embodiments of the present application is not particularly limited, and may be any electronic device known in the art. In some embodiments, the electronic device may include, but is not limited to, a notebook computer, a pen input computer, a mobile computer, an e-book player, a portable phone, a portable fax machine, a portable copying machine, a portable printer, stereo headphones, a video recorder, a liquid crystal display television, a portable cleaner, a portable CD player, a mini disk, a transceiver, an electronic notebook, a calculator, a memory card, a portable recorder, a radio, a backup power supply, a motor, a car, a motorcycle, an electric bicycle, a bicycle, a lighting fixture, a toy, a game console, a clock, an electric tool, a flash lamp, a camera, a large household storage battery, a lithium-ion capacitor and the like.

**Specific Examples**

Some specific examples and comparative examples are listed below. Laser particle size analysis and a scanning electron microscope test are respectively performed on their cathode materials, and a cycle performance test, a cycle expansion rate test and a storage expansion rate test are performed on their electrochemical devices (lithium-ion batteries) to better illustrate the technical solutions of the present application.

**I. Test methods**

**1.1 Laser particle size analysis:**

The laser particle size test is to test the particle size distribution based on the principle that particles of different sizes can make the laser to generate scattering of different intensities. The main indicators that characterize the particle size characteristics of particles include Dn10, Dv10, Dv50, Dv90, Dv99 and the like. Dv50 is called granularity, which indicates the particle size of the material when the volume of the particle size distribution accumulates to 50% of the total volume from the small particle size in the volume-based particle size distribution. Dv10 is called 10% accumulated particle size, which indicates the particle size when the volume of the particle size distribution accumulates to 10% of the total volume. Dn10 is called 10% number progressive particle size, which indicates the particle size of the material when the number of the particle size distribution accumulates to 10% of the total number from the small particle size in the number-based particle size distribution. In the examples and comparative examples of the present application, a Mastersizer 2000 laser particle size distribution tester was used to analyze the particle size of particles of samples: a sample of a cathode material was dispersed in 100 mL of dispersant (deionized water) such that a shading degree reached 8-12%. Subsequently, the sample was subjected to ultrasonic treatment for 5 minutes at an ultrasonic intensity of 40 KHz and 180 w. After the ultrasonic treatment, the sample was subjected to laser particle size distribution analysis to obtain particle size distribution data.

**1.2 Scanning electron microscope test:**

After the cathode material of each of the examples and the comparative examples of the present application was imaged by a 500-times scanning electron microscope (ZEISS Sigma-02-33, Germany), about 200 to about 600 secondary particles of the cathode material with complete shape and no obstruction were randomly selected in their electron microscope images, the maximum length a (long axis) of the secondary particles in the electron microscope image was used as the particle size, and the maximum length b (short axis) of particles perpendicular to the long axis in the microscope image was recorded with the volume of the secondary particles and its corresponding amount at the same time. Subsequently, after 10 other different regions of the cathode material were randomly selected and imaged to obtain 10 different electron microscope images, the above steps were repeated. The average value of particle size of all the secondary particles was calculated to obtain the average particle size of the secondary particles of the cathode material, the volume and number distribution of the secondary particles, and the rate of the respective number or volume of a first group of secondary particles, a second group of secondary particles and a third group of secondary particles in the total number or total volume of the secondary particles.

**1.3 Cycle performance test:**

The lithium-ion battery of each of the following examples and comparative examples was placed in a thermostat at 45°C±2°C and allowed to stand for 2 hours, charged at a constant current of 1.5 C to 4.25 V, and then charged at a constant voltage of 4.25 V to 0.02 C and allowed to stand for 15 minutes; the lithium-ion battery was then discharged at a constant current of 4.0 C to 2.8 V, which was one charge-discharge cycle, and a discharge capacity of the first cycle of the lithium-ion battery was recorded; and the charge-discharge cycle was repeated for 500 times according to the above method, and a discharge capacity after 500 cycles was recorded.

4 lithium-ion batteries were taken for each group, and the average value of capacity retention rates of the lithium-ion batteries was calculated. Cycle retention rate of lithium-ion battery = discharge capacity after 500th cycle (mAh)/discharge capacity (mAh) after first cycle × 100%.

**1.4 Cycle expansion rate test:**

The thickness of the lithium-ion battery after 500 cycles was tested by using a thickness measurement device, and the variation in thickness after 500 cycles of the above cycle test was recorded. 4 lithium-ion batteries were taken for each group, and the cycle expansion rate of the lithium-ion battery after 500 cycles was calculated.

Cycle expansion rate = (thickness of lithium-ion battery after 500 cycles/thickness of fresh lithium-ion battery - 1) × 100%.

**1.5 Storage expansion rate test:**

The lithium-ion battery of each of the following examples and comparative examples was placed in a thermostat at 25°C±2°C and allowed to stand for 2 hours, charged at a constant current of 1.5 C to 4.25 V, and then charged at a constant voltage of 4.25 V to 0.05 C, and subsequently, the lithium-ion battery was stored in a thermostat at 85°C±2°C for 12 hours. After the high-temperature storage, the thickness of the lithium-ion battery subjected to high-temperature storage was tested by using a thickness measurement device, and the variation in thickness after the high-temperature storage was recorded. 4 lithium-ion batteries were taken for each group, and the high-temperature storage expansion rate of the lithium-ion battery was calculated.

$$\text{High-temperature storage expansion rate} = (\text{thickness of lithium-ion battery after high-temperature storage}/\text{thickness of fresh lithium-ion battery} - 1) \times 100\%$$

**II. Preparation methods**

**2.1 Preparation of cathode**

The cathode material of each of the following examples and comparative examples, acetylene black and polyvinylidene fluoride were dissolved in an N-methylpyrrolidone (NMP) solution according to a weight ratio of 94:3:3 to form a cathode slurry. Aluminum foil was used as a cathode current collector, the cathode slurry was coated on the cathode current collector, and drying, cold pressing and cutting procedures were performed to obtain the cathode.

**2.2 Preparation of anode**

Artificial graphite, acetylene black, styrene-butadiene rubber and carboxymethylcellulose sodium were dissolved in deionized water according to a weight ratio of 96:1:1.5:1.5 to form an anode slurry. Copper foil was used as an anode current collector, the anode slurry was coated on the anode current collector, and drying, cold pressing and cutting procedures were performed to obtain the anode.

**2.3 Preparation of separator**

Polyvinylidene fluoride was dissolved in water and mechanically stirred to form a uniform slurry, and the slurry was coated on two side surfaces of a porous substrate (polyethylene) that had been coated with ceramic coatings on both sides, and drying was performed to form the separator.

**2.4 Preparation of electrolyte**

In an environment with a water content of less than 10 ppm, lithium hexafluorophosphate and a non-aqueous organic solvent (ethylene carbonate (EC):diethyl carbonate (DEC):propylene carbonate (PC):propyl propionate (PP):vinylene carbonate (VC) = 20:30:20:28:2, weight ratio) were mixed according to a weight ratio of 8:92 to form the electrolyte.

**2.5 Preparation of lithium-ion battery**

The cathode, the separator and the anode were sequentially stacked such that the separator was located between the cathode and the anode to perform an isolation function, and then wound into an electrode assembly. Subsequently, the electrode assembly was placed in an aluminum-plastic film packaging bag, and dehydrated at 80°C to obtain a dry electrode assembly. Subsequently, the electrolyte was injected into the dry electrode assembly, and vacuum packaging, standing, formation, shaping and other procedures were performed, thereby completing the preparation of the lithium-ion batteries of the following examples and comparative examples.

Example 1

A batch method was used: nickel sulfate ($NiSO_4 \cdot 6H_2O$), cobalt sulfate ($CoSO_4 \cdot 7H_2O$) and manganese sulfate ($MnSO_4 \cdot H_2O$) were mixed according to a stoichiometric ratio of $Ni_{0.8}Co_{0.1}Mn_{0.1}(OH)_2$ to obtain a mixed salt solution, 1M sodium hydroxide solution (NaOH) was taken as alkaline solution and 1M ammonia water ($NH_3 \cdot H_2O$) was taken. After a reactor filled with water was filled with nitrogen, the above three solutions were added, wherein the pH in the reactor was kept at about 11.0±0.1. Subsequently, rapid stirring was performed at a rotation rate of 800 rpm for 12 hours. After the rapid stirring, slow stirring was performed at a rotation rate of 300 rpm for 24 hours. The obtained solid-liquid mixture was filtered, washed with water and dried to obtain a precursor.

The obtained precursor, LiOH and $Al_2O_3$ were mixed according to a stoichiometric ratio of $LiNi_{0.8}Co_{0.08}Mn_{0.1}Al_{0.02}O_2$, subjected to primary sintering at 780°C in an oxygen atmosphere for a primary sintering time of 12 hours, and washed and dried to obtain a primary sintered product. The primary sintered product and boric acid ($H_3BO_3$) were mixed uniformly, and subjected to secondary sintering at 400°C in an oxygen atmosphere for a secondary sintering time of 5 hours, and screening treatment was performed to obtain the cathode material.

Example 2

The preparation manner was the same as that in Example 1, except that: in Example 2, the rapid stirring was performed at a rotation rate of 600 rpm.

Example 3

The preparation manner was the same as that in Example 1, except that: in Example 3, the rapid stirring was performed at a rotation rate of 700 rpm.

Example 4

The preparation manner was the same as that in Example 1, except that: in Example 4, the rapid stirring was performed at a rotation rate of 900 rpm.

Example 5

The preparation manner was the same as that in Example 1, except that: in Example 5, the rapid stirring was performed at a rotation rate of 1000 rpm.

Example 6

The preparation manner was the same as that in Example 1, except that: in Example 6, the time of the rapid stirring was 6 hours.

Example 7

The preparation manner was the same as that in Example 1, except that: in Example 7, the time of the rapid stirring was 9 hours.

Example 8

The preparation manner was the same as that in Example 1, except that: in Example 8, the time of the rapid stirring was 15 hours.

Example 9

The preparation manner was the same as that in Example 1, except that: in Example 9, the slow stirring was performed at a rotation rate of 200 rpm.

Example 10

The preparation manner was the same as that in Example 1, except that: in Example 10, the slow stirring was performed at a rotation rate of 400 rpm.

Example 11

The preparation manner was the same as that in Example 1, except that: in Example 11, the time of the slow stirring was 12 hours.

Example 12

The preparation manner was the same as that in Example 1, except that: in Example 12, the time of the slow stirring was 18 hours.

Example 13

The preparation manner was the same as that in Example 1, except that: in Example 13, the time of the slow stirring was 30 hours.

Example 14

The preparation manner was the same as that in Example 1, except that: in Example 14, nickel sulfate ($NiSO_4 \cdot 6H_2O$), cobalt sulfate ($CoSO_4 \cdot 7H_2O$) and manganese sulfate ($MnSO_4 \cdot H_2O$) were mixed according to a stoichiometric ratio of $Ni_{0.6}Co_{0.2}Mn_{0.2}(OH)_2$ to form a mixed salt solution, and the obtained precursor, LiOH and $Al_2O_3$ were mixed according to a stoichiometric ratio of $LiNi_{0.6}Co_{0.18}Mn_{0.2}Al_{0.02}O_2$.

Example 15

The preparation manner was the same as that in Example 1, except that: in Example 15, nickel sulfate ($NiSO_4 \cdot 6H_2O$), cobalt sulfate ($CoSO_4 \cdot 7H_2O$) and manganese sulfate ($MnSO_4 \cdot H_2O$) were mixed according to a stoichiometric ratio of $Ni_{0.5}Co_{0.2}Mn_{0.3}(OH)_2$ to form a mixed salt solution, and the obtained precursor, LiOH and $Al_2O_3$ were mixed according to a stoichiometric ratio of $LiNi_{0.5}Co_{0.18}Mn_{0.3}Al_{0.02}O_2$.

Comparative Example 1

A continuous method was used:
Nickel sulfate ($NiSO_4 \cdot 6H_2O$), cobalt sulfate ($CoSO_4 \cdot 7H_2O$) and manganese sulfate ($MnSO_4 \cdot H_2O$) were mixed according to a stoichiometric ratio of $Ni_{0.8}Co_{0.1}Mn_{0.1}(OH)_2$ to obtain a mixed salt solution, 1M sodium hydroxide solution (NaOH) was taken as alkaline solution and 1M ammonia water ($NH_3 \cdot H_2O$) was taken. After a reactor filled with water was filled with nitrogen, the above three solutions were added, wherein the pH in the reactor was kept at about $11.0 \pm 0.1$. Subsequently, continuous stirring was performed at a rotation rate of 600 rpm for 48 hours. After the continuous stirring, the obtained solid-liquid mixture was filtered, washed with water and dried to obtain a precursor.
The obtained precursor, LiOH and $Al_2O_3$ were mixed according to a stoichiometric ratio of $LiNi_{0.8}Co_{0.08}Mn_{0.1}Al_{0.02}O_2$, subjected to primary sintering at 780°C in an oxygen atmosphere for a primary sintering time of 12 hours, and washed and dried to obtain a primary sintered product. The primary sintered product and boric acid ($H_3BO_3$) were mixed uniformly, and subjected to secondary sintering at 400°C in an oxygen atmosphere for a secondary sintering time of 5 hours, and screening treatment was performed to obtain the cathode material.

Comparative Example 2

The preparation manner was the same as that in Comparative Example 1, except that: in Comparative Example 2, the solution in the reactor was subjected to continuous stirring at a rotation rate of 800 rpm for 24 hours.
The cathode materials of the above examples and comparative examples were subjected to a laser particle size test and a scanning electron microscope test, and test results were recorded. Subsequently, a fresh cathode was prepared, and the thickness, width, length and weight of the fresh cathode were measured by using a thickness measurement device. Subsequently, the lithium-ion batteries were subjected to an ultimate compacted density test, a cycle performance test and a storage expansion rate test, and test results were recorded.
Statistical values of the cathode materials of Examples 1-15 and Comparative Examples 1 and 2 and results of the laser particle size test and the scanning electron microscope test are shown in Table 1 below.

**Table 1**

| Example/Comparative Example | Rapid Stirring Rate (rpm) | Rapid Stirring Time (hours) | Slow Stirring Rate (rpm) | Slow Stirring Time (hours) | Chemical Formula of Cathode Material | Number Rate of Third Group of Secondary Particles | Volume Rate of Third Group of Secondary Particles | Secondary Particles Dv10/Dn10 | Secondary particles a value/b value |
|---|---|---|---|---|---|---|---|---|---|
| Example 1 | 800 | 12 | 300 | 24 | $LiNi_{0.8}Co_{0.08}Mn_{0.1}Al_{0.02}O_2$ | 93% | 95% | 1.1 | 1.2 |
| Example 2 | 600 | 12 | 300 | 24 | $LiNi_{0.8}Co_{0.08}Mn_{0.1}Al_{0.02}O_2$ | 81% | 83% | 1.9 | 1.6 |
| Example 3 | 700 | 12 | 300 | 24 | $LiNi_{0.8}Co_{0.08}Mn_{0.1}Al_{0.02}O_2$ | 88% | 90% | 1.6 | 1.4 |
| Example 4 | 900 | 12 | 300 | 24 | $LiNi_{0.8}Co_{0.08}Mn_{0.1}Al_{0.02}O_2$ | 86% | 93% | 1.5 | 1.2 |
| Example 5 | 1000 | 12 | 300 | 24 | $LiNi_{0.8}Co_{0.08}Mn_{0.1}Al_{0.02}O_2$ | 76% | 90% | 1.9 | 1.1 |
| Example 6 | 800 | 6 | 300 | 24 | $LiNi_{0.8}Co_{0.08}Mn_{0.1}Al_{0.02}O_2$ | 82% | 84% | 2.0 | 1.4 |
| Example 7 | 800 | 9 | 300 | 24 | $LiNi_{0.8}Co_{0.08}Mn_{0.1}Al_{0.02}O_2$ | 87% | 90% | 1.6 | 1.3 |
| Example 8 | 800 | 15 | 300 | 24 | $LiNi_{0.8}Co_{0.08}Mn_{0.1}Al_{0.02}O_2$ | 87% | 93% | 1.3 | 1.1 |
| Example 9 | 800 | 12 | 200 | 24 | $LiNi_{0.8}Co_{0.08}Mn_{0.1}Al_{0.02}O_2$ | 91% | 92% | 1.3 | 1.3 |
| Example 10 | 800 | 12 | 400 | 24 | $LiNi_{0.8}Co_{0.08}Mn_{0.1}Al_{0.02}O_2$ | 91% | 94% | 1.1 | 1.3 |
| Example 11 | 800 | 12 | 300 | 12 | $LiNi_{0.8}Co_{0.08}Mn_{0.1}Al_{0.02}O_2$ | 52% | 63% | 3.4 | 1.4 |
| Example 12 | 800 | 12 | 300 | 18 | $LiNi_{0.8}Co_{0.08}Mn_{0.1}Al_{0.02}O_2$ | 70% | 78% | 2.2 | 1.3 |
| Example 13 | 800 | 12 | 300 | 30 | $LiNi_{0.8}Co_{0.08}Mn_{0.1}Al_{0.02}O_2$ | 90% | 94% | 1.2 | 1.2 |
| Example 14 | 800 | 12 | 300 | 24 | $LiNi_{0.6}Co_{0.18}Mn_{0.2}Al_{0.02}O_2$ | 92% | 94% | 1.2 | 1.2 |
| Example 15 | 800 | 12 | 300 | 24 | $LiNi_{0.5}Co_{0.18}Mn_{0.3}Al_{0.02}O_2$ | 91% | 93% | 1.3 | 1.1 |
| Comparative Example 1 | 600 | 48 | - | - | $LiNi_{0.8}Co_{0.08}Mn_{0.1}Al_{0.02}O_2$ | 46% | 29% | 11.4 | 2.0 |
| Comparative Example 2 | 800 | 24 | - | - | $LiNi_{0.8}Co_{0.08}Mn_{0.1}Al_{0.02}O_2$ | 28% | 20% | 10 | 1.4 |

Test results of the lithium-ion batteries of Examples 1-15 and Comparative Examples 1 and 2 subjected to the cycle performance test, the cycle expansion rate test and the high-temperature storage expansion rate test are shown in Table 2 below.

**Table 2**

| Example/Comparative Example | Cycle Retention Rate | Cycle Expansion Rate | High-temperature Storage Expansion Rate |
|---|---|---|---|
| Example 1 | 95% | 4% | 8% |
| Example 2 | 85% | 12% | 20% |
| Example 3 | 91% | 9% | 14% |
| Example 4 | 87% | 10% | 16% |
| Example 5 | 82% | 15% | 22% |
| Example 6 | 86% | 13% | 21% |
| Example 7 | 90% | 10% | 14% |
| Example 8 | 93% | 7% | 12% |
| Example 9 | 93% | 6% | 11% |
| Example 10 | 92% | 6% | 10% |
| Example 11 | 72% | 19% | 28% |
| Example 12 | 85% | 11% | 15% |
| Example 13 | 94% | 7% | 11% |
| Example 14 | 96% | 4% | 7% |
| Example 15 | 97% | 4% | 7% |
| Comparative Example 1 | 68% | 32% | 38% |
| Comparative Example 2 | 65% | 42% | 46% |

As shown in Table 1, the batch method was used in Examples 1-15 of the present application: the precursor formed by the rapid stirring and the slow stirring can effectively control the particle size range of the secondary particles of the cathode material. Specifically, by comparing the number rate and volume rate of the third group of secondary particles of the secondary particles of the examples and the comparative examples, it can be known that the particle size distribution of the cathode materials of the embodiments of the present application is relatively concentrated, and in Example 1, the number rate and volume rate of the third group of the secondary particles can reach 93% and 95%. Furthermore, the Dv10/Dn10 value of the cathode materials in the examples of the present application is close to 1, it indicates that the particle size distribution of the cathode materials of the examples is relatively concentrated or uniform, which means that the content of the fine particles of the cathode materials of the examples of the present application is low. In contrast, the Dv10/Dn10 value of the cathode materials of Comparative Examples 1 and 2 is greater than 10, it indicates that there are a large number of fine particles in the cathode materials of Comparative Examples 1 and 2. In addition, by comparing Examples 1-5 with Comparative Examples 1-2, it can be known that the ratio of the long axis a to the short axis b of the secondary particles of the cathode materials is affected by the stirring rate of the rapid stirring of the cathode materials. The higher the stirring rate, higher the sphericity of the secondary particles.

It can be known from Table 1 and Table 2 that, compared with Comparative Examples 1 and 2, the lithium-ion batteries having the cathode materials of the present application in Examples 1-15 of the present application have significantly improved cycle performance and storage performance. By comparing Comparative Examples 1 and 2 with Examples 1-15, it can be known that the lithium-ion batteries having the cathode materials with the particle size distribution of the embodiments of the present application can effectively maintain a cycle retention rate of 70% or above. In addition, in the cycle expansion rate test and the storage expansion rate test, compared with Comparative Examples 1 and 2, the lithium-ion batteries of Examples 1-15 of the present application have significantly reduced cycle expansion rate and the high-temperature storage expansion rate. It indicates that the cathode material of the present application can make the weight distribution of the cathode material of the cathode more uniform through its specific particle size distribution and further obtain the optimal dynamic performance. At the same time, according to the cathode material of the present application, the contents of large particles and fine particles in the cathode material can be reduced so as to avoid uneven reaction or excessive reaction between the cathode material and the electrolyte, thereby improving the cycle performance of the lithium-ion battery and reducing the gas production of the cathode material under high-temperature storage.

Through the comparison of the above examples and comparative examples, it can be clearly understood that the cathode material of the present application can effectively obtain the lithium-ion battery having good cycle performance and highly-stable storage performance by controlling the total number rate and total volume rate of the third group of secondary particles in the secondary particles in the cathode material.

Throughout the specification, references to "embodiment", "part of embodiments", "one embodiment", "another example", "example", "specific example" or "part of examples" mean that at least one embodiment or example of the present application includes specific features, structures, materials or characteristics described in the embodiment or example. Thus, the descriptions appear throughout the specification, such as "in some embodiments", "in an embodiment", "in one embodiment", "in another example", "in an example", "in a particular example" or "for example", are not necessarily the same embodiment or example in the application. Furthermore, the specific features, structures, materials or characteristics in the descriptions can be combined in any suitable manner in one or more embodiments or examples.

Although the illustrative embodiments have been shown and described, it should be understood by those skilled in the art that the above embodiments cannot be interpreted as limitations to the present application, and the embodiments can be changed, substituted and modified without departing from the spirit, principle and scope of the present application.

**Claims**

1. A cathode material, comprising secondary particles formed by primary particles, the secondary particles comprising:

   a first group of secondary particles, the particle size of the first group of secondary particles being greater than 1.25 times of the average particle size of the secondary particles;
   a second group of secondary particles, the particle size of the second group of secondary particles being less than 0.75 time of the average particle size of the secondary particles; and
   a third group of secondary particles, the particle size of the third group of secondary particles being 0.75 time to 1.25 times of the average particle size of the secondary particles.

2. The cathode material according to claim 1, wherein based on the total number of the secondary particles, the total number of the third group of secondary particles accounts for greater than or equal to 60%.

3. The cathode material according to claim 1, wherein based on the total volume of the secondary particles, the total volume of the third group of secondary particles accounts for greater than or equal to 50%.

4. The cathode material according to claim 1, wherein the secondary particles meet at least one of the following criteria:

   (a) the ratio of DvlO to Dn10 of the secondary particles is 1 to 3;
   (b) based on the total number of the secondary particles, the length ratio of a long axis to a short axis of 80% or above of the secondary particles is 1 to 2; and
   (c) the average particle size of the secondary particles is 1 $\mu$m to 30 $\mu$m.

5. The cathode material according to claim 1, wherein a crystal structure of the primary particles comprises one or more of a hexagonal lamellar structure, a spinel structure and a rock salt structure, and the crystal structure belongs to an R-$\overline{3}$ space group.

6. The cathode material according to claim 1, wherein the cathode material meets at least one of the following criteria:

   (a) based on the total number of the secondary particles, the total number of the third group of secondary particles accounts for 80% to 93%, and the total number of the first group of secondary particles accounts for 1% to 10%;
   (b) based on the total volume of the secondary particles, the total volume of the third group of secondary particles accounts for 80% to 95%, and the total volume of the first group of secondary particles accounts for 1% to 10%; and
   (c) the ratio of the total number of the first group of secondary particles to the total number of the second group of secondary particles is 0.1 to 10, and the ratio of the total volume of the first group of secondary particles to the total volume of the second group of secondary particles is 0.1 to 10.

7. The cathode material according to claim 1, wherein the cathode material comprises a lithium-containing metal oxide represented by a general formula $Li_xM1_yM2_zO_2$, wherein $0.95 \leq x \leq 1.05$, $0 < y \leq 1$, $0 \leq z \leq 0.1$, $y+z=1$, M1 is selected from the group consisting of Ni, Co, Mn, Al and combinations thereof, and M2 is selected from the group consisting of Mg, Ti, Zr, Sc, V, Cr, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu and combinations thereof.

8. The cathode material according to claim 1, wherein the secondary particles further comprise a surface layer, the surface layer comprising at least one element of B, Al, Zr, C and S.

9. The cathode material according to claim 1, wherein the specific surface area of the cathode material is 0.300 $m^2$/g to 1.000 $m^2$/g.

10. An electrochemical device, comprising:

an anode;
a separator; and
a cathode, the cathode comprising the cathode material according to any of claims 1 to 9.

11. An electronic device, comprising the electrochemical device according to claim 10.

FIG. 1

FIG. 2

FIG. 3

## INTERNATIONAL SEARCH REPORT

| International application No. |
| --- |
| **PCT/CN2020/073589** |

**A. CLASSIFICATION OF SUBJECT MATTER**

H01M 4/131(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 正极, 阴极, 锂, 二次, 次级, 团聚, 粒径, 尺寸, 包覆, cell, battery, positive, cathode, lithium, secondary, agglomerat+, diameter, size, D50, coat+

**C. DOCUMENTS CONSIDERED TO BE RELEVANT**

| Category* | Citation of document, with indication, where appropriate, of the relevant passages | Relevant to claim No. |
| --- | --- | --- |
| X | CN 109987650 A (GRADUATE SCHOOL AT SHENZHEN, TSINGHUA UNIVERSITY) 09 July 2019 (2019-07-09) description, paragraphs 18-57 | 1-6, 10-11 |
| Y | CN 109987650 A (GRADUATE SCHOOL AT SHENZHEN, TSINGHUA UNIVERSITY) 09 July 2019 (2019-07-09) description, paragraphs 18-57 | 7-9 |
| Y | CN 110233247 A (CONTEMPORARY AMPEREX TECHNOLOGY LTD.) 13 September 2019 (2019-09-13) description, paragraphs 16-72 | 7-9 |
| A | CN 108269966 A (CHINA AUTOMOTIVE BATTERY RESEARCH INSTITUTE CO., LTD.) 10 July 2018 (2018-07-10) entire document | 1-11 |
| A | CN 107706364 A (NINGBO FULI BATTERY MATERIAL TECHNOLOGY CO., LTD.) 16 February 2018 (2018-02-16) entire document | 1-11 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 July 2020** | **28 August 2020** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/073589**

| Patent document cited in search report | | | Publication date (day/month/year) | Patent family member(s) | Publication date (day/month/year) |
|---|---|---|---|---|---|
| CN | 109987650 | A | 09 July 2019 | None | |
| CN | 110233247 | A | 13 September 2019 | None | |
| CN | 108269966 | A | 10 July 2018 | None | |
| CN | 107706364 | A | 16 February 2018 | None | |

Form PCT/ISA/210 (patent family annex) (January 2015)